# EUROPEAN PATENT APPLICATION

(11) **EP 1 710 809 A1**
(43) Date of publication of application: **11.10.2006**
(21) Application number: 06006695.8
(22) Date of filing: 30.03.2006
(51) Int. Cl.: G21C 3/32

(54) **Nuclear fuel assembly low pressure drop top nozzle**

(30) Priority: 08.04.2005 US 102148
(71) Applicant: Westinghouse Electric Company LLC, Monroeville, PA 15146-2866 (US)
(72) Inventor: Brashier, Raymond W., Columbia, South Carolina 29210 (US); Walton, Lewis A., Forest, Virginia 24552 (US)
(74) Representative: Gallo, Wolfgang

(57) **Abstract**

A top nozzle (101) is for a fuel assembly (10) of a nuclear reactor. The top nozzle (101) includes a plate portion (102) having a first plurality of apertures (103) structured to receive guide thimbles (18) of the fuel assembly (10) and second and third pluralities of apertures which comprise first and second coolant holes (104,105) structured to provide passage of a coolant fluid therethrough. The first and second coolant holes (104,105) have different first and second cross-sectional shapes, respectively. The top nozzle (101) and plate portion (102) preferably comprise a single-piece casting in which numerous features, such as the first and second holes (104,105) are as-cast, thus reducing production costs. The coolant holes (104,105) preferably comprise a one-eighth-symmetric coolant hole pattern (129). The as-cast nature of the coolant holes (104,105) permits the ligaments (107) between coolant holes (104,105) to be reduced in thickness, thereby increasing coolant flowthrough area and minimizing the pressure drop across the nozzle (101).

## Description

### BACKGROUND OF THE INVENTION

### Field of the Invention

The present invention relates generally to nuclear reactors and, more particularly, to a low pressure drop top nozzle for a nuclear fuel assembly. Background Information

Generally, a nuclear reactor core is comprised of a large number of elongated fuel assemblies. Conventionally, the fuel assemblies include a plurality of fuel rods held in an organized array by grids spaced along the fuel assembly length. The grids are attached to a number of control rod guide thimbles which extend above and below the opposite ends of the fuel rods. Top and bottom nozzles on opposite ends of the fuel assembly are secured to the guide thimbles. At the top end of the fuel assembly, openings are provided in the lower adapter plate of the top nozzle to receive the guide thimbles.

As stated, for example, in U.S. Patent No. 4,762,676 (Gjertsen et al.), it is conventional practice to design the adapter plate of the fuel assembly top nozzle to accommodate at least three design requirements: a structural criteria wherein the adapter plate and top nozzle must be capable of lifting the fuel assembly under a predetermined load (e.g., a multiplier times the force of gravity); a fuel rod capture criteria in which the adapter plate and top nozzle must sufficiently mechanically restrain the fuel rods from ejecting upwardly from the core; and, a heat transfer criteria wherein the adapter plate and top nozzle must include sufficient open area to permit reactor coolant flow to pass through the top nozzle with minimum pressure drop.

Most known top nozzles satisfy the first, structural requirement by employing a multi-component nozzle assembly which typically comprises a plurality of high-strength components which are made separately and then welded together. See, e.g., U.S. Patent No. 5,812,624 (Burfin et al.). The difficulty arises when attempting to balance the tradeoff between the first and the third, somewhat contradictory criteria. Further complicating matters is the fact that industry requirement of having a structural element of the nozzle, such as a ligament, above each fuel rod, must be maintained. Specifically, providing maximum coolant flowthrough the adapter plate to achieve the desired minimal pressure drop typically involves making the coolant holes in the adapter plate as large as possible, which decreases the ligament between holes potentially compromising the integrity of the adapter plate. Conversely, in order to have the most robust adapter plate design possible, a thick ligament structure is typically required, but this results in smaller coolant holes and thus higher pressure drop.

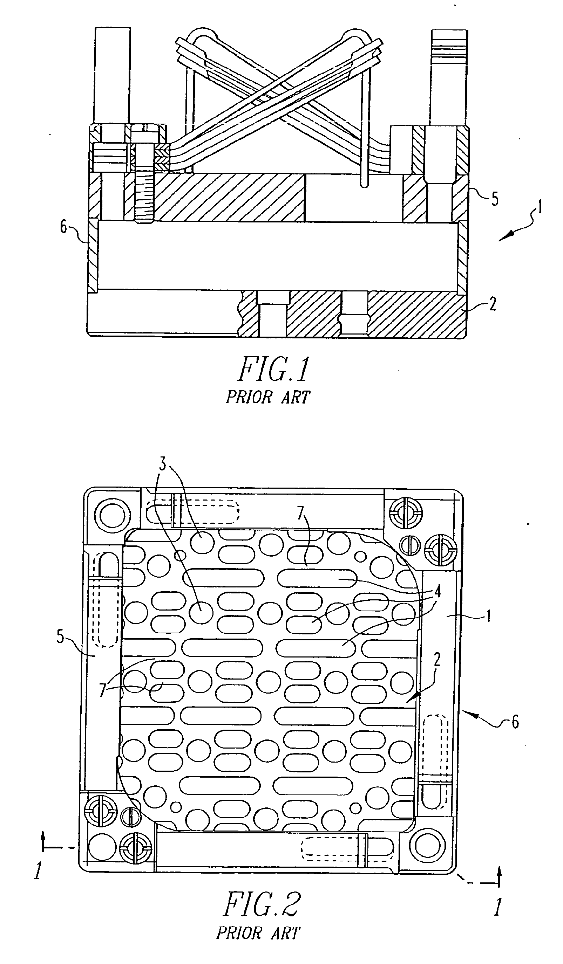

Figures 1 and 2 show a representative example of a top nozzle 1 designed with the intent of satisfying the foregoing criteria. In general, the top nozzle 1 includes an adaptor plate 2 having a plurality of circular openings 3 (Figure 2) for securing the ends of the guide tubes (not shown in Figures 1 and 2) of the fuel assembly and, a plurality of generally oblong water passage openings 4. Above the adaptor plate 2, the top nozzle 1 includes a top plate 5 which is fixed by an enclosure wall 6 to the adaptor plate 2. The nozzle 1 is fabricated by welding the adapter plate 2, top plate 5, and enclosure wall 6, which are separate components, together proximate the peripheral edge of each component. The components 2, 5, 6 have a substantially square transverse cross-section corresponding to the transverse section of the fuel assembly. Thus, the top nozzle 1 comprises multiple components, including several machined pieces (e.g., without limitation, adapter plate 2; wall 6), which must be welded to the top plate 5.

Among the disadvantages associated with such top nozzle designs are the fact that they fail to maximize coolant flow area. Specifically, the adapter plate 2 is machined to include only unilateral direction flow slots 4 for coolant flow. Several lengths of the generally oblong water passage openings 4 are present. As shown, the resulting slot pattern is only half-symmetrical and thus does not optimize hydraulic performance and is structurally inefficient. Specifically, the ligaments 7 are thick and create an unequal stress distribution in the adapter plate 2 during, for example, shipping, operational loads, and accident conditions. More specifically, the foregoing structure results in an undesirable curved and otherwise sporadic load path from a load point (*e*.*g*., a thimble location) through the ligaments 7 to the periphery of the nozzle 1. A still further disadvantage is the fact that, in order to improve the top nozzle 1 pressure drop, for example by reducing inlet hydraulic losses of coolant entering channels, each flow slot 4 requires secondary machining operations (*e.g.*, without limitation, chamfering and deburring. Each machined surface has requisite dimensions and tolerances, thus complicating the manufacture and inspection of the nozzle 1.

Accordingly, there is room for improvement in nuclear fuel assembly top nozzles.

### SUMMARY OF THE INVENTION

These needs and others are satisfied by the present invention, which is directed to a top nozzle having a design that is structurally optimized, efficient to produce, and which exhibits superior hydraulic performance.

As one aspect of the invention, a nozzle is for the fuel assembly of a nuclear reactor. The fuel assembly includes a plurality of elongated nuclear fuel rods each having an extended axial length, a first end, and a second end, a number of substantially transverse support grids spaced along the axial length of the fuel rods in order to hold the fuel rods in an organized array, and plurality of guide thimbles disposed through the support grids and along the fuel rods. The nozzle comprises: a plate portion extending substantially transversely with respect to the axis of the fuel rods and having at least a first plurality, a second plurality and a third plurality of apertures formed therein, each aperture of the first, second and third pluralities of apertures extending substantially in the axial direction of the fuel rods. The first plurality of apertures are structured to receive a portion of the guide thimbles and the second and third pluralities of apertures comprise first and second coolant holes extending through the plate portion in order to provide passage of a coolant fluid therethrough, the first and second coolant holes having first and second cross-sectional shapes, respectively, the first cross-sectional shape being different from the second cross-sectional shape.

The nozzle and the plate portion thereof may comprise a single-piece casting. At least the first and second coolant holes may be as-cast features of the single-piece casting. The first plurality of apertures may be a plurality of bosses each including a plurality of ligaments extending radially outwardly from each the boss, wherein the plurality of ligaments substantially define the first and second coolant holes. Each ligament of the plurality of ligaments may have a leading edge and a trailing edge, wherein the leading and trailing edges are blended to define at least a first radius. The single-piece casting may further include a number of walls each extending substantially perpendicularly from the plate portion at the periphery of the plate portion, wherein the first coolant holes are substantially defined by a plurality of ligaments extending inwardly from each of the number of walls and each of the plurality of ligaments extending inwardly from the wall includes a gusset blended with respect to the wall in order to define at least a second radius.

The forgoing ligament structure and aperture configuration comprise an optimal nozzle structure wherein the ligaments act as beam elements to provide a point-to-point, direct load transfer path for distributing structural loads experienced by the nozzle during fuel handling, during operation, and in accident conditions. As a result of the optimized structure, the additional benefit of the ligaments may be thinned to allow more open flow area through the coolant holes and an associated pressure drop is achieved.

The gussets contribute to the optimized nozzle structure by strengthening the plate portion, effectively making the unsupported span of the adapter plate smaller further allowing the ligaments to be thinned. A still further advantage of the invention is the fact that the advantageous features of the nozzle are largely as-cast, with minimal secondary machining, if any, being required.

The first coolant holes may have a generally oblong cross-sectional shape and the second coolant holes may have a substantially triangular cross-sectional shape. The plate portion may have a substantially square transverse cross-section wherein the generally oblong first coolant holes are disposed adjacent the periphery of the substantially square plate portion and the substantially triangular second coolant holes are disposed inboard of the generally oblong first coolant holes. The substantially square plate portion may have a center and the generally oblong first coolant holes and the substantially triangular second coolant holes may comprise a coolant hole pattern which is one-eighth symmetric with respect to the center of the plate portion.

As another aspect of the invention, a fuel assembly for a nuclear reactor comprises: a plurality of elongated nuclear fuel rods each having an extended axial length, a first end, and a second end; a bottom nozzle disposed proximate the second ends of the fuel rods; a number of substantially transverse support grids spaced along the axial length of the fuel rods in order to hold the fuel rods in an organized array; a plurality of guide thimbles disposed through the support grids and along the fuel rods; and a top nozzle coupled to the guide thimbles proximate the first ends of the fuel rods and exhibiting the aforementioned desirable structure and associated attributes.

### BRIEF DESCRIPTION OF THE DRAWINGS

A full understanding of the invention can be gained from the following description of the preferred embodiments when read in conjunction with the accompanying drawings in which:
Figure 1 is a cross-sectional side view of a prior art multi-component, welded top nozzle, with the cross-section being taken along line 1-1 of Figure 2;
Figure 2 is a top plan view of the prior art top nozzle of Figure 1;
Figure 3 is an elevational view, partially in section, of a fuel assembly employing a single casting, low pressure drop top nozzle in accordance with the invention, the assembly being illustrated in vertically shortened form with parts broken away for clarity;
Figure 4 is an isometric view of the top of the single casting, low pressure drop top nozzle of Figure 3, showing the as-cast and blended gusset features of the nozzle;
Figure 5 is an isometric view of the bottom of the single casting, low pressure drop top nozzle of Figure 3, showing the one-eigth coolant hole pattern of the nozzle;
Figure 6 is a close-up, isometric view of a portion of the single casting, low pressure drop top nozzle of Figure 3, illustrating the quarter symmetry of the coolant hole pattern and the as-cast ligament and boss features of the nozzle;
Figure 7 is a side view of a cutaway section of Figure 6 taken along line 7-7, showing the blended leading and trailing edges of the as-cast ligaments of the nozzle; and
Figure 8 is a cross-sectional view taken along 8-8 of Figure 7.

### DESCRIPTION OF THE PREFERRED EMBODIMENTS

For purposes of illustration, the present invention will be described as applied to a top nozzle for a nuclear fuel assembly, although it will become apparent that the novel single casting, quarter-symmetric coolant hole pattern, low pressure drop, and as-cast features of the present invention could also be employed with, for example, the bottom nozzle of a nuclear fuel assembly.

Directional phrases used herein, such as, for example, upper, lower, top, bottom, left, right, and derivatives thereof, relate to the orientation of the elements shown in the drawings and are not limiting upon the claims unless expressly recited therein.

As employed herein, the phrase "as-cast" refers to a component which is substantially finished following the first production step. In other words, the component does not require secondary machining operations, subsequent to being cast, in order to achieve the desired end product.

As employed herein, the statement that two or more parts are "coupled" together shall mean that the parts are joined together either directly or joined through one or more intermediate parts.

As employed herein, the term "number" shall include one or more than one (*i*.*e*., a plurality).

### Fuel Assembly

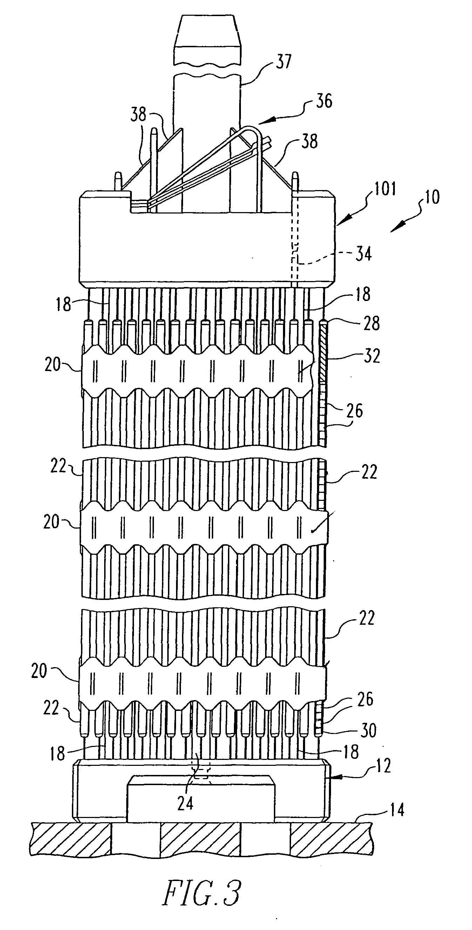

Referring now to the drawings and particularly to Figure 3, there is shown an elevational view of the fuel assembly, represented in vertically shortened form and being generally designated by reference numeral 10. The fuel assembly 10 is the type used in a pressurized water reactor and has a structural skeleton which, at its lower end, includes a bottom nozzle 12. The bottom nozzle 12 supports the fuel assembly 10 on a lower core support plate 14 in the core region of the nuclear reactor (not shown). In addition to the bottom nozzle 12, the structural skeleton of the fuel assembly 10 also includes at its upper end, the top nozzle (shown generally as reference 101) of the present invention (described in greater detail hereinbelow) and a number of guide tubes or thimbles 18, which extend longitudinally between and are rigidly attached at opposite ends to the bottom and top nozzles 12 and 101.

The fuel assembly 10 further includes a plurality of transverse grids 20 axially-spaced along and mounted to the guide thimble tubes 18 and, an organized array of elongated fuel rods 22 transversely-spaced and supported by the grids 20. The assembly 10 also has an instrumentation tube 24 located in the center thereof and extending between and mounted to the bottom and top nozzles 12 and 101. In view of the foregoing arrangement of parts, it will be understood that the fuel assembly 10 forms an integral unit capable of being conveniently handled without damaging the assembly parts.

As previously discussed, the array of fuel rods 22 in the fuel assembly 10 are held in spaced relationship with one another by the grids 20 which are spaced along the fuel assembly length. Each fuel rod 22 includes nuclear fuel pellets 26 and is closed at its opposite ends by upper and lower end plugs 28 and 30. The pellets 26 are maintained in a stack by a plenum spring 32 disposed between the upper end plug 28 and the top of the pellet stack. The fuel pellets 26, composed of fissile material, are responsible for creating the reactive power of the reactor. A liquid moderator/coolant such as water or water containing boron, is pumped upwardly through a plurality of flow openings in the lower core plate 14 to the fuel assembly. The bottom nozzle 12 of the fuel assembly 10 passes the coolant upwardly through the guide tubes 18 and along the fuel rods 22 of the assembly in order to extract heat generated therein for the production of useful work.

To control the fission process, a number of control rods 34 are reciprocally moveable in the guide thimbles 18 located at predetermined positions in the fuel assembly 10. Specifically, a rod cluster control assembly 36 positioned above the top nozzle 101 supports the control rods 34. The control assembly has an internally threaded cylindrical member 37 with a plurality of radially-extending flukes or arms 38. Each arm 38 is interconnected to control rod 34 such that the control rod assembly 36 is operable to move the control rods vertically in the guide thimbles 18 to thereby control the fission process in the fuel assembly 10, all in a well known manner. With the exception of the improved top nozzle 101, which will now be discussed, all of the foregoing is old and generally well known in the art.

### Cast, Low Pressure Drop Top Nozzle

As previously discussed, known fuel assembly top nozzles (e.g., top nozzle 1 of Figures 1 and 2) fail to optimize hydraulic and structural performance by being limited to unilateral direction flowthrough slots for coolant flow (best shown in Figure 2) and by requiring welding of the numerous machined components. Additionally, the current art requires a number of subsequent machining operations, thereby unnecessarily complicating the construction and inspection of top nozzles. Therefore, to improve the structural, hydraulic and economic efficiency of the top nozzle, it is highly desirable to reduce the number of nozzle components and the number of production steps required to make the nozzle.

The present invention relates to a top nozzle 101 which, in addition to securing the fuel assembly 10 (Figure 1), is also structured in a manner which simplifies its production while maintaining the structural integrity of the nozzle 101, improves hydraulic performance (e.g., reduces the pressure drop over that experienced by known top nozzles designs such as that of the '624 patent), and reduces production costs of the top nozzle 101.

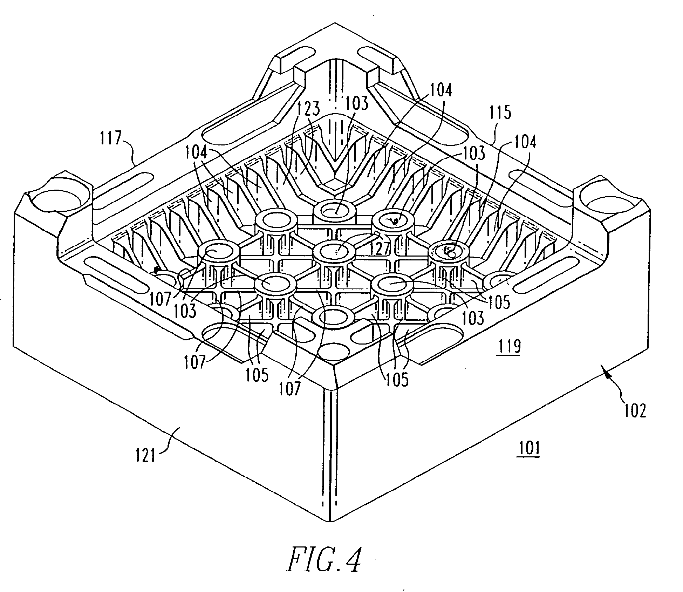

Referring to Figures 4-7, the top nozzle 101 includes a plate portion 102 extending substantially transversely with respect to the axis of the fuel rods 22 (Figure 3) and having at least a first plurality, a second plurality and a third plurality of apertures 103,104,105 formed therein. All of the apertures 103,104,105 preferably extend substantially in the axial direction of the fuel rods 22 (Figure 31). The apertures of the first plurality of apertures 103 are structured to receive a portion (e.g., the top) of the guide thimbles 18, as shown in Figure 3. More specifically, each aperture of the first plurality of apertures 103 has a substantially circular cross-section with a bore diameter and configuration substantially similar to circular apertures 3 previously discussed in connection with Figure 2. The exemplary first plurality of apertures 103 are also arranged on the plate portion 102 substantially similarly to the arrangement of circular apertures 3 of Figure 2. In this manner, the top nozzle 101 of the present invention is readily compatible with the existing guide thimble 18 (Figure 3) configuration.

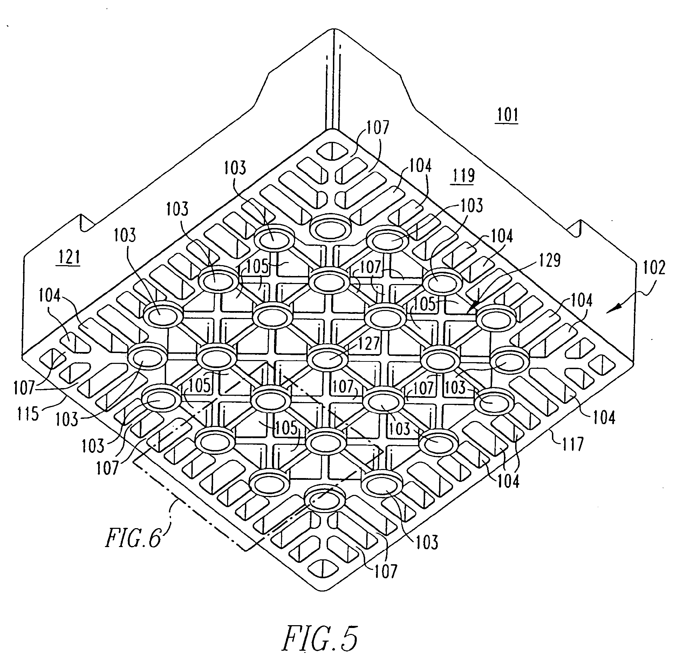

The second and third pluralities of apertures comprise first and second coolant holes 104,105 which extend through the plate portion 102 in order to provide passage of a coolant fluid therethrough. Unlike the unilateral coolant holes 4 of Figure 3, which all consist of one cross-sectional shape (e.g., oblong), the exemplary first and second coolant holes 104,105 of the present invention have first and second cross-sectional shapes, respectively, which are different from one another. Specifically, as shown with reference to Figures 4-6, the exemplary second plurality of apertures, or first coolant holes 104, each have a generally oblong cross-sectional shape, while the third plurality of apertures, or second coolant holes 105, have a substantially triangular cross-sectional shape. Thus, as used herein, the reference to a "different shape" refers to an entirely different geometry, not merely to openings of the same general geometric shape but having different sizes. The coolant hole pattern 129 (Figure 5) of the invention is a resultant byproduct of the optimized point-to-point, direct load path structure of the nozzle 101, previously discussed.

Specifically, the point-to-point load distribution and related optimized features of the exemplary top nozzle 101 are attributable to the cast ligament 107 and gusset 123 features of the invention. More specifically, as shown in Figures 4,6 and 7 (discussed further hereinafter), the ligaments 107 are arranged in such a manner that a direct load path is provided from the load point (e.g., a thimble location at a boss of first aperture 103), where the load is experienced by the nozzle 101 during, for example, handling of the fuel, operations or during an accident condition, to the periphery of the nozzle 101 (e.g., one of walls 115,117,119 and 121 (Figure 4)). The load can, therefore, be effectively distributed across the top nozzle 101. This, in combination with the gussets 123, which extend from the sidewalls 115,117,119 and 121 in order to effectively reduce the unsupported span of the plate portion 102, provide an extremely robust and structurally optimized top nozzle 101. By way of specific example, the ligaments 107, due to the improved nozzle design, can be thinned, thereby increasing the flowthrough area of the coolant holes 104,105.

The arrangement and shape of coolant holes 104,105 of the exemplary top nozzle 101, differ significantly from, for example, top nozzle 1 of Figure 2. More particularly, referring back to Figure 2, the coolant holes 4 of top nozzle 1 are, as previously discussed, arranged in a half-symmetric flow slot pattern in which each of the flow slots 4 (Figure 2) are oriented in a unilateral direction (e.g., in the left and right directions, from the perspective of Figure 2). While such an orientation may be more conducive to machining of the coolant holes 4, which has been the approach employed in the art for well over 35 years, it is restrictive to maximizing coolant flow area and, therefore, does not optimize hydraulic performance (e.g., pressure drop across the nozzle). The design requires secondary machining operations, such as the introduction of one or more chamfers (not shown) in order to reduce, for example, inlet hydraulic losses of coolant entering the channels 4. Accordingly, unlike the top nozzle design of the present invention, the foregoing, existing design is structurally inefficient, as well as inefficient from a performance standpoint and a production perspective. Specifically, it is not conducive to improved manufacturing techniques (e.g., without limitation, high-quality lost wax casting) which have been developed in the art.

Conversely, in the example of Figure 5, the exemplary top nozzle 101 provides a coolant hole pattern 129 which is one-eighth-symmetric with respect to the center 127 of the substantially square-shaped plate portion 102. Although the improved hydraulic performance of the top nozzle 101 is most notably attributable to the reduced ligament 107 thickness and thus larger coolant flowthrough area afforded by the invention, it is worth noting that increased symmetry also provides more uniform coolant flow and thus improved hydraulic performance, including low pressure drop across the outlet of the nozzle 101. More specifically, coolant flows substantially equally through the holes 104,105 of the four symmetric quadrants of the exemplary nozzle 101. Because all four quadrants are the same, there is essentially no path of least resistance which exists in other less symmetric nozzle designs, and which creates a pressure differential across the nozzle (e.g., top nozzle 1 of Figure 2) as the coolant seeks to follow the path of least resistance through the adapter plate 2 (Figure 2).

In the example of Figures 4-6, the generally oblong-shaped first coolant holes 104 are disposed adjacent the periphery of the substantially square-shaped plate portion 102, while the substantially triangular-shaped second coolant holes 105 are disposed inboard of the first coolant holes 104, toward the center 127 of the plate portion 102, as shown. It will be appreciated that the coolant hole pattern 129 illustrated and described herein is but one representative example of an improved top nozzle 101 in accordance with the present invention. For example, it will be understood that the coolant holes 104,105 could have alternative cross-sectional shapes (e.g., square, rectangular, circular) and configurations (not shown) without departing from the scope of the invention. It will further be appreciated that more than two different types or shapes of coolant holes could be employed. It will also be understood that the invention is applicable to a variety of fuel arrays in addition to the non-limiting 17x17 fuel array example illustrated and described herein.

In addition to the improved, point-to-point load distribution and coolant hole pattern 129 and the benefits associated therewith, the exemplary top nozzle 101 provides several additional advantages. Specifically, the exemplary top nozzle 101 comprises a single-piece casting with the plate portion 102 being an integral part of the single-piece casting as opposed to a separate, machined component which is subsequently welded to a top plate 5 (Figure 1) and enclosure walls 6 (Figure 1) as required by existing top nozzle designs. Numerous features of the top nozzle 101, including the exemplary first and second coolant holes 104,105, are as-cast features of the nozzle 101. In other words, the exemplary top nozzle 101 is a single casting in which the majority of the surfaces are finished, as-cast, without requiring subsequent machining. Accordingly, any known or suitable casting manufacturing technique (e.g., without limitation, lost wax casting) can be employed to efficiently and economically produce the top nozzle 101 of the invention. The top nozzle 101 is contemplated as comprising a single-piece 304 stainless steel casting, although it will be appreciated that any known or suitable alternative material could be employed. Casting is also conducive to providing the exemplary one-eighth-symmetric coolant hole pattern 129 and other advantageous features, such as the exemplary blended ligaments 107 and gussets (described in further detail hereinbelow) of the invention. Specifically, casting permits nearly all of these advantageous features to be created in essentially one manufacturing step, thus substantially eliminating the subsequent machining steps (e.g., without limitation, creating chamfers) and welding operations required by the prior art.

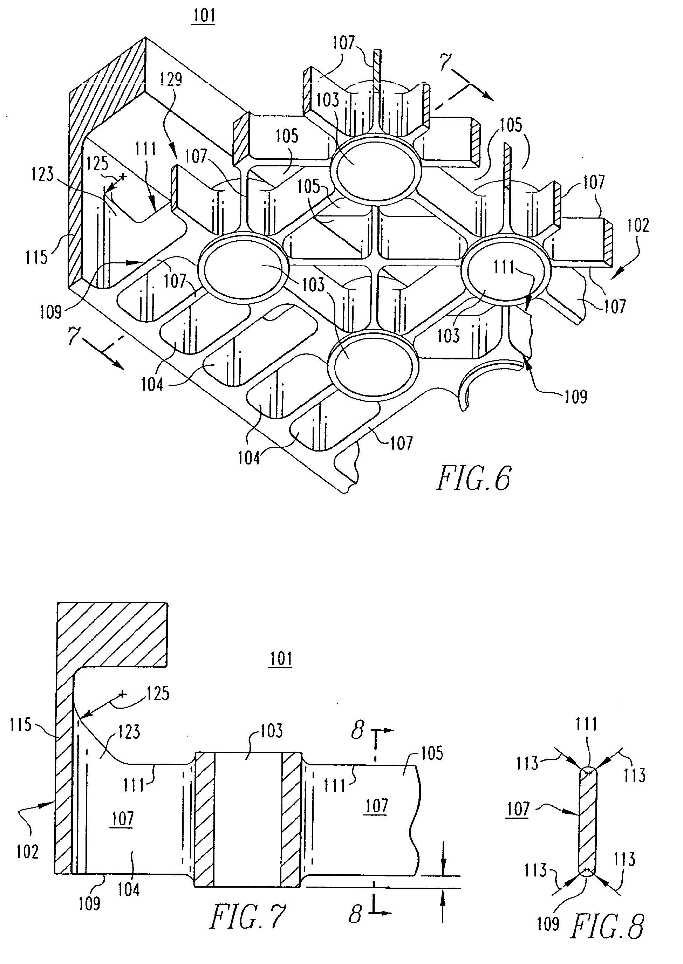

As best shown in Figures 6 and 7, the exemplary first plurality of apertures comprise a plurality of bosses 103 which are preferably integrally cast portions of the plate portion 102, as shown. Each boss 103 includes a plurality of ligaments 107 extending radially outwardly therefrom in order to substantially define the first and second coolant holes 104,105, as shown. Each of the ligaments 107 has a leading edge 109 and a trailing edge 111. The exemplary ligaments 107 are blended not only at their leading and trailing edges 109,111 with respect to the structure to which they attach (e.g., bosses 103 and wall 115), in order to substantially eliminate areas of abrupt change, such as sharp corners which contribute to hydraulic losses experienced across the nozzle 101 and create an area of stress concentration. The blended nature of the exemplary nozzle 101 is another advantage which, in addition to overall efficiency, is attributable to casting.

In the example shown and discussed herein, the leading and trailing edges 109,111 of the ligaments 107 are blended by way of one or more curves defining at least a first radius 113 (Figure 7). The exact dimension and configuration of such radius 113 is not meant to be a limiting aspect of the invention. Additionally, it will be appreciated that the blended portion of the ligament 107 may comprise more than one radius or a gradual transitional shape other than an arcuate shape having a radius. The ligaments 107 of the exemplary top nozzle 101 are also blended on both their left and right edges (from the perspective of Figure 7) as well as on each side surface and, at each intersection with one of a boss for first aperture 103, a wall 115,117,119,121 (Figures 4 and 5), or another ligament 107 (see, e.g., Figures 4 and 5). Similarly, the ligaments 107 which substantially define the generally oblong first coolant holes 104 adjacent the periphery of the plate portion 102 are blended at their intersection with the wall 115,117,119,121 (Figures 4 and 5) from which they inwardly extend.

As best shown in Figure 7, the exemplary ligaments 107 which extend inwardly from the walls (e.g., 115) are blended to define a gusset 123 having at least a second radius 125. The gusset 123 extends down (from the perspective of Figure 7) the wall 115 in order to effectively reduce the unsupported span of the plate portion 102 and to, thereby, permit the ligaments 107 to be reduced in size. In this manner, the single-piece casting of the exemplary top nozzle 101 achieves comparable strength and rigidity with respect to prior art welded top nozzles (e.g., top nozzle 1 of Figures 1 and 2). It will, however, be appreciated that the gusset 123 may have any known or suitable alternative blended configuration other than the exemplary second radius 125. It will also be appreciated that the precise measurement and configuration of the exemplary second radius 125 is not meant to be limiting upon the invention. Any alternative blended radius or other suitable shape which avoids creating an abrupt intersection with the wall (e.g., 115) could be employed.

As previously discussed, the single-piece cast nature of the exemplary top nozzle 101 provides each of the foregoing advantageous features, as-cast, thereby further improving the ease of manufacture and thus economical efficiency of the top nozzle 101. It is also extremely strong further lending to the ability of the ligaments 107 to be thinned when compared to the prior art, which in turn allows the flow area of the coolant holes 104,105 to be increased, improving hydraulic performance of the top nozzle 101. Specifically, the exemplary ligaments may be reduced in thickness by as much as 25 percent or more when compared with known ligaments (see, e.g., Figure 2), and the exemplary one-eighth-symmetric coolant flow pattern 129 of the plate portion 102 is expected to provide an increase in effective flow area of about 15 percent over known unilateral hole patterns.

By increasing the effective coolant flow area, the top nozzle 101 of the invention provides a low pressure drop across the outlet region of the top nozzle 101. The improved pressure drop may be used to maintain existing fuel assembly 10 (Figure 3) loss coefficients in, for example, new fuel designs which are known to have an added pressure drop from an increased number of intermediate flow mixing grids. For example, without limitation, one new fuel design which is commonly referred to in the art as the Next Generation Fuel Design, has an increased number of intermediate flow mixing grids and, which contribute to a greater pressure drop. The top nozzle 101 of the invention, due to its low pressure drop, can compensate for this mid grid drop.

As previously discussed, most of the nozzle surfaces and all of the exemplary plate portion ligaments 107 are as-cast finished. Thus, minimal secondary machining is required to finish the nozzle 101, which lowers production costs. Additionally, because the exemplary plate portion design is tooling cast, the design can be hydraulically qualified to provide a consistently achievable pressure drop thereby reducing, if not eliminating, all geometrical product assurance inspections, further reducing manufacture and resultant product costs. Furthermore, as can be appreciated with reference to Figure 7, the plane of the top surfaces (from the perspective of Figure 7) of the bosses surrounding first apertures 103 is elevated or spaced from the plane of the top surfaces of the ligaments 107. Accordingly, as a result, in the event subsequent machining was required, such as face machining to achieve a desired local thickness, the bottom and top (from the perspective of Figure 7) surfaces and associated plane can easily be established at each boss 103 location without requiring machining of each ligament 107. Such machining of the ligaments 107 would counter the hydraulic benefit provided by the as-cast, blended feature thereof. Accordingly, the combined as-cast blending leading and trailing ligament edge feature of the present invention further reduces the nozzle loss co-efficient and is, therefore, an improvement over the machined chamfers commonly employed in the art.

In view of the foregoing, the top nozzle 101 of the present invention provides a single-piece cast component which is structurally optimized, yet relatively simple and thus economical in comparison with known nozzle designs.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A nozzle for a fuel assembly (10) of a nuclear reactor, said fuel assembly (10) including a plurality of elongated nuclear fuel rods (22) each having an extended axial length, a first end (28), and a second end (30), a number of substantially transverse support grids (20) spaced along the axial length of said fuel rods (22) in order to hold said fuel rods in an organized array, and plurality of guide thimbles (18) disposed through said support grids (20)'and along said fuel rods (22), said nozzle comprising:
a plate portion (102) extending substantially transversely with respect to the axis of said fuel rods (22) and having at least a first plurality, a second plurality and a third plurality of apertures (103, 104, 105) formed therein, each aperture of the first, second and third pluralities of apertures (103, 104, 105) extending substantially in the axial direction of the fuel rods (22),
wherein the first plurality of apertures (103) are structured to receive a portion of said guide thimbles (18), and
wherein the second and third pluralities of apertures comprise first and second coolant holes (104, 105) extending through said plate portion (102) in order to provide passage of a coolant fluid therethrough, the first and second coolant holes (104, 105) having first and second cross-sectional shapes, respectively, the first cross-sectional shape being a different geometry from the second cross-sectional shape.

2. The nozzle of claim 1 wherein the first and second coolant holes (104, 105) form a coolant hole pattern (129) which is one-eighth-symmetric with respect to the center (127) of the plate portion (102).

3. The nozzle of claim 1 or 2 wherein said nozzle (101) and said plate portion (102) thereof comprise a single-piece casting.

4. The nozzle of claim 3 wherein at least said first and second coolant holes (104, 105) are as-cast features of said single-piece casting.

5. The nozzle of claim 3 or 4 wherein said first plurality of apertures are a plurality of bosses (103) each including a plurality of ligaments (107) extending radially outwardly from each said boss (103); and wherein said plurality of ligaments (107) substantially define said first and second coolant holes (104, 105).

6. The nozzle of claim 5 wherein each ligament of said plurality of ligaments (107) has a leading edge (109) and a trailing edge (111); and wherein the leading and trailing edges (109, 111) of each of said plurality of ligaments (107) are blended to define at least a first radius (113).

7. The nozzle of any of claims 3 to 6 wherein said single-piece casting further includes a number of walls (115, 117, 119, 121) each extending substantially perpendicularly from said plate portion (102) at the periphery of said plate portion (102); wherein said first coolant holes (104) are substantially defined by a plurality of ligaments (107) extending inwardly from each of said number of walls (115, 117, 119, 121); and wherein each of said plurality of ligaments (107) extending inwardly from said wall includes a gusset (123) blended with respect to said wall in order to define at least a second radius (125).

8. The nozzle of any of claims 1 to 7 wherein the first coolant holes (104) have a generally oblong cross-sectional shape; and wherein the second coolant holes (105) have a substantially triangular cross-sectional shape.

9. The nozzle of claim 8 wherein said plate portion (102) has a substantially square transverse cross-section; wherein said generally oblong first coolant holes (104) are disposed adjacent the periphery of said substantially square plate portion (102); and
wherein said substantially triangular second coolant holes (105) are disposed inboard of said generally oblong first coolant holes (104).

10. The nozzle of claim 9 wherein said substantially square plate portion (102) has a center (127); and wherein said generally oblong first coolant holes (104) and said substantially triangular second coolant holes (105) comprise a coolant hole pattern (129) which is one-eighth-symmetric with respect to the center (127) of said plate portion (102).

11. A fuel assembly (10) for a nuclear reactor, said fuel assembly comprising:
a plurality of elongated nuclear fuel rods (22) each having an extended axial length, a first end (28), and a second end (30);
a bottom nozzle (12) disposed proximate the second ends (30) of said fuel rods (22);
a number of substantially transverse support grids (20) spaced along the axial length of said fuel rods (22) in order to hold said fuel rods (22) in a organized array;
a plurality of guide thimbles (18) disposed through said support grids (20) and along said fuel rods (22); and
a top nozzle (101) according to any of claims 1 to 10 coupled to the guide thimbles (18) proximate the first ends (28) of the fuel rods (22).
